# EUROPÄISCHE PATENTSCHRIFT

(11) **EP 2 656 993 B1**
(45) Veröffentlichungstag und Bekanntmachung des Hinweises auf die Patenterteilung: **14.10.2015**
(21) Anmeldenummer: 13165547.4
(22) Anmeldetag: 26.04.2013
(51) Int. Cl.: B29C 35/04, B29C 43/52, B29C 70/44

(54) **Formwerzeug und Verfahren zur Herstellung eines Faserverbundbauteils**
Moulding tool and process for making a fibre composite component
Outil de formage et procédé de fabrication d'un élément en composite renforcé de fibres

(30) Priorität: 26.04.2012 DE 102012103674
(43) Veröffentlichungstag der Anmeldung: 30.10.2013
(73) Patentinhaber: Deutsches Zentrum für Luft- und Raumfahrt e.V., 51147 Köln (DE)
(72) Erfinder: Kleineberg, Markus, 30966 Hemmingen (DE); Wurl, Thomas, 38108 Braunschweig (DE); Grote, Matthias, 49809 Lingen (DE); Bold, Jens, 38106 Braunschweig (DE)
(74) Vertreter: Aisch, Sebastian

(56) Entgegenhaltungen:
- DE-A1- 3 637 272
- DE-B3-102008 015 070
- US-A- 3 525 098
- US-A- 4 552 715
- US-A1- 2010 136 232
- US-B1- 6 991 449
- US-B1- 7 964 129
- DATABASE WPI Week 199725 Thomson Scientific, London, GB; AN 1997-276032 XP002701591, -& JP H09 99478 A (NIPPON GOSEI GOMU KK) 15. April 1997 (1997-04-15)
- DATABASE WPI Week 199120 Thomson Scientific, London, GB; AN 1991-143887 XP002701592, -& JP H03 79312 A (TRINITY IND CORP) 4. April 1991 (1991-04-04)
- DATABASE WPI Week 200864 Thomson Scientific, London, GB; AN 2008-K83965 XP002701593, -& KR 100 777 689 B1 (HEO N J) 29. November 2007 (2007-11-29)

## Beschreibung

Die Erfindung betrifft ein Formwerkzeug zur Herstellung eines Faserverbundbauteils mit einer formgebenden Werkzeugoberfläche, an der ein Faserhalbzeug zur Herstellung des Faserverbundbauteils anliegt, und mit mindestens einer zur Temperierung des Faserhalbzeuges vorgesehenen Temperiereinrichtung, die mit der formgebenden Werkzeugoberfläche zumindest in Teilbereichen zur Temperierung des Faserhalbwerkzeuges thermisch zusammenwirkt. Die Erfindung betrifft ebenfalls eine Vorrichtung und ein Verfahren hierzu.

Bei der Herstellung von Faserverbundbauteilen wird ein in ein Formwerkzeug eingebrachtes Faserhalbzeug mit einem Matrixharz infiltriert und anschließend ausgehärtet. Durch die Harzvernetzungsreaktion des Matrixharzes entsteht ein mit den Fasern des Faserhalbzeuges integral verbundenes Bauteil, das bei sehr geringem Gewicht eine besonders hohe Steifigkeit zumindest in Faserrichtung aufweist. Bekannt sind auch bereits vorgetränkte Faserhalbzeuge, sogenannte Prepregs.

Die Aushärtung des Matrixharzes nach der Infiltration des Faserhalbzeuges erfolgt durch Beaufschlagung des Formwerkzeuges bzw. des darin befindlichen Bauteils mit Temperatur, so dass die Vernetzungsreaktion in Gang gesetzt werden kann. Dabei kommt diesem Prozessschritt eine entscheidende Bedeutung zu, da innerhalb dieses Schrittes die endgültige Bauteilgeometrie festgelegt wird. Um ein passgenaues Bauteil mit guten mechanischen Eigenschaften herstellen zu können, müssen die Prozessrandbedingungen während des Aushärtungsprozesses möglichst exakt eingehalten werden. Dabei werden das Bauteil und das Formwerkzeug nicht selten mit Temperaturen von bis zu 180° C beaufschlagt.

Der Prozess des Aushärtens des infiltrierten Matrixharzes erfolgt dabei in der Regel weiterhin durch Beaufschlagung des Formwerkzeuges mit Druck, so dass der Prozess nicht selten in einem abgeschlossenen System, wie beispielsweise einem Autoklav, abläuft. Die Temperierung des Formwerkzeuges bzw. des Bauteils in dem Formwerkzeug, d. h. die Temperaturerhöhung sowie das Abkühlen der betroffenen Komponenten, muss somit im Inneren eines abgeschlossenen Systems zuverlässig erfolgen.

So ist allgemein bekannt, dass die Temperierung des Formwerkzeuges bzw. des darin enthaltenen Bauteils mit Hilfe von das Formwerkzeug umströmender temperierter Luft erfolgen kann, wodurch zunächst das Formwerkzeug aufgeheizt und durch die thermische Wechselwirkung mit dem darin enthaltenen Bauteil dieses dann ebenfalls mit aufgeheizt wird. Diese Form der Temperierung mittels eines sog. "Umluftofen" hat jedoch den entscheidenden Nachteil, dass insbesondere bei Formwerkzeugen, die aufgrund der komplexen dreidimensionalen Struktur des herzustellenden Bauteils eine große thermische Masse aufweisen, diese unnötigerweise mit temperiert werden muss, wobei auf die detaillierten Prozessparameter im Inneren des Formwerkzeuges kein Einfluss mehr genommen werden kann. Aufgrund der großen thermischen Masse eines Formwerkzeuges ist auch die Phase der Abkühlung relativ groß, was sich insbesondere bei der Serienproduktion hinsichtlich der Kosten negativ auswirkt.

Des weiteren sind sog. elektrische Widerstandsheizungen innerhalb des Formwerkzeuges bekannt, die zwar eine gezielte Temperierung von bestimmten Werkzeugbereichen ermöglichen, jedoch einen erhöhten Anlagenaufwand mit sich bringen. Ein erhöhter Anlagenaufwand führt dabei zu erhöhten Kosten und einer größeren Ausfallrate, was die Kosten in der Serienproduktion erhöht.

Darüber hinaus befinden sich Verfahren hinsichtlich der elektromagnetischen Induktion bzw. elektromagnetischen Strahlung, wie beispielsweise Mikrowellenstrahlung, in der Erprobung, wobei insbesondere der technische Aufwand der Anlage nur selten im Verhältnis zu dem Nutzen steht. Darüber hinaus stehen insbesondere erhebliche technische Probleme im Bereich der Hochfrequenztechnik derartigen Serienrealisierungen im Wege.

Aus der DE 10 2011 054 465.8 ist beispielsweise ein Formwerkzeug bekannt, das im Inneren einen sog. Latentwärmespeicher aufweist, der bei Aktivierung seine gespeicherte Wärmeenergie an seine Umgebung freisetzt. Hiermit können Formwerkzeuge realisiert werden, die gezielt auf die Anforderungen des herzustellenden Bauteils Rücksicht nehmen. Der Nachteil ist jedoch, dass ein solcher Latentwärmespeicher von außen angeregt werden muss, was wiederum den Anlagenaufwand erhöht. Außerdem müssen die Latentwärmespeicher nach ihrer Benutzung wieder aufgeladen werden, was zusätzlichen Aufwand verursacht.

Aus der US-A-2010 0136 232 ist ein Formwerkzeug und ein Verfahren zur Herstellung eines Faserverbundbauteils bekannt, wobei eine Temperiereinrichtung mit einem Hohlraum zum zirkulieren eines gasförmigen Fluids vorgesehen ist. Eine Temperierkammer für ein Formwerkzeug ist aus der US-B-6 991 449 bekannt.

Es ist daher Aufgabe der vorliegenden Erfindung, ein verbessertes Formwerkzeug sowie ein verbessertes Verfahren zur Herstellung eines Faserverbundbauteils anzugeben, bei denen ohne Erhöhung des Anlagenaufwandes die Temperierung des Bauteils im Aushärteprozess wesentlich verbessert werden kann.

Die Aufgabe der vorliegenden Erfindung wird mit dem Formwerkzeug und das Verfahren der Ansprüche 1 und 6 gelöst. Vorteilhafte Ausgestaltungen sind in den Unteransprüchen offenbart.

Die Aufgabe wird mit dem Formwerkzeug der eingangs genannten Art erfindungsgemäß dadurch gelöst, dass die Temperiereinrichtung einen in dem Formwerkzeug vorgesehenen Hohlraum aufweist, der über einen Fluideinlass mit einer Temperierkammer, in der das Formwerkzeug zur Herstellung des Faserverbundbauteils eingebracht wurde, kommunizierend derart in Verbindung steht, dass ein temperiertes, in der Temperierkammer zirkulierendes gasförmiges Fluid zur Temperierung des Faserhalbzeuges in den Hohlraum strömen kann.

Es wird somit ein Formwerkzeug vorgeschlagen, das eine formgebende Werkzeugoberfläche hat, an der ein Faserhalbzeug zur Herstellung eines Faserverbundbauteils anliegt. Darüber hinaus weist das Formwerkzeug eine Temperiereinrichtung auf, die mit der formgebenden Werkzeugoberfläche zumindest in Teilbereichen zur Temperierung des Faserhalbzeuges thermisch so zusammenwirkt, dass das Faserhalbzeug durch die Temperiereinrichtung temperierbar ist.

Erfindungsgemäß wird nun vorgeschlagen, dass die Temperiereinrichtung ein in dem Formwerkzeug vorgesehenen Hohlraum aufweist, in den ein temperiertes, gasförmiges Fluid über einen Fluideinlass, der mit dem Hohlraum in Verbindung steht, einströmen kann. Der Fluideinlass verbindet dabei den Hohlraum der Temperiereinrichtung mit einer Temperierkammer, in die das Formwerkzeug zur Herstellung des Faserverbundbauteils eingebracht wurde. In der Temperierkammer zirkuliert ein temperiertes, gasförmiges Fluid, das ähnlich wie bei einem Umluftofen das Formwerkzeug und somit das Faserhalbzeug temperieren soll. Durch den vorgesehenen Fluideinlass kann dieses temperierte, in der Temperierkammer zirkulierende gasförmige Fluid nunmehr in den Hohlraum des Formwerkzeuges einströmen und dort das Faserhalbzeug direkt temperieren.

Hierdurch wird der Vorteil erreicht, dass die thermische Masse des verwendeten Formwerkzeuges erheblich reduziert werden kann, ohne dass die formgebende Eigenschaft des Formwerkzeuges darunter leidet. Durch das gezielte Einströmen in spezielle Bereiche innerhalb des Formwerkzeuges lässt sich darüber hinaus der gesamte Temperierprozess, der für die spätere Bauteilqualität wesentlich ist, an die vorgegebenen Bedingungen sehr gut adaptieren.

Unter Temperieren wird im Sinn der vorliegenden Erfindung sowohl ein Erwärmen als auch ein Abkühlen verstanden.

Durch die reduzierte thermische Masse verringert sich der Energiebedarf während des Aushärtungsprozesses. Darüber hinaus wird die thermische Trägheit des Gesamtsystems reduziert, was ein schnelles Aufheizen und Abkühlen ermöglicht und somit die Prozesszeiten erhöhen kann, was insbesondere bei der Serienproduktion besonders vorteilhaft ist.

Ein weiterer Vorteil besteht darin, dass das vorgestellte Formwerkzeug einen besonders einfachen Aufbau aufweist, wodurch keine externen Verkabelungen notwendig sind. Dies reduziert den Anlagenaufwand und somit die Ausfallrate.

Erfindungsgemäß ist ein Fluidauslass vorgesehen, so dass der Hohlraum über den Fluidauslass mit der Temperierkammer kommunizierend derart in Verbindung steht, dass das in den Hohlraum eingeströmte gasförmige Fluid in die Temperierkammer zurückströmen kann. Hierdurch wird ein kontinuierlicher Austausch des gasförmigen Fluides im Hohlraum erreicht, ohne den Strömungsfluss des Fluides in der Temperierkammer zu unterbrechen.

Eine Temperierkammer im Sinne der vorliegenden Erfindung kann beispielsweise ein Umluftofen oder ein Autoklav sein, die zur Aufnahme eines derartigen Formwerkzeuges ausgebildet sind.

In einer vorteilhaften Ausführungsform weist der Hohlraum der Temperiereinrichtung des Formwerkzeuges mindestens zwei Fluidbereiche auf. Ein erster Fluidbereich, der mit dem Fluideinlass verbunden ist, ist bauteilnah vorgesehen und zur Temperierung des Faserhalbzeuges ausgebildet. Bauteilnah meint, dass das in dem ersten Fluidbereich strömende gasförmige Fluid thermisch direkt über die Werkzeugoberfläche auf das Faserhalbzeug wirkt, das an der Werkzeugoberfläche anliegt.

Ein mit dem ersten Fluidbereich verbundener zweiter Fluidbereich, der bauteilfern vorgesehen ist, führt das in den Hohlraum strömende gasförmige Fluid über den Fluidauslass zurück in die Temperierkammer, wo es dann dem weiteren Zirkulationsprozess zugeführt wird.

In einer weiteren besonders vorteilhaften Ausführungsform weist der Fluideinlass ein Einströmrohr auf, dessen eines Ende in den Hohlraum mündet und dessen anderes Ende in Strömungsrichtung des in der Temperierkammer zirkulierenden gasförmigen Fluides ausgerichtet ist. Ähnlich einem Pitot-Rohr wird so ein Teil des in der Temperierkammer zirkulierenden gasförmigen Fluides in den Hohlraum geleitet, um dort das Faserhalbzeug für den Aushärteprozess zu temperieren. Hierdurch kann das in der Temperierkammer zur Temperierung des Formwerkzeuges vorgesehene temperierte gasförmige Fluid direkt und gezielt zur Temperierung des Faserhalbzeuges in den Hohlraum des Formwerkzeuges geleitet werden.

Vorteilhafterweise ist eine Drosseleinrichtung vorgesehen, welche die in den Hohlraum einströmende Fluidmenge steuern kann. Hierdurch wird es möglich, dass lokal die Fluidzufuhr an die gewünschten Prozessparameter angepasst werden kann, um so die Bauteilqualität zu erhöhen.

Die Aufgabe wird im übrigen auch gelöst durch eine Vorrichtung zur Herstellung eines Faserverbundbauteils mit
- einem Formwerkzeug wie vorstehend genannt,
- einer Temperierkammer, in der das Formwerkzeug zur Herstellung des Faserverbundbauteils einbringbar ist, und
- einem Strömungs- und Temperiersystem, das zum Temperieren eines in der Temperierkammer befindlichen gasförmigen Fluides und zum Zirkulieren des gasförmigen Fluides ausgebildet ist.

Die Aufgabe wird im übrigen auch mit dem Verfahren gemäß Anspruch 6 gelöst zur Herstellung eines Faserverbundbauteils, mit den Schritten:
a) Bereitstellen eines Formwerkzeuges, das eine formgebende Werkzeugoberfläche, an der ein Faserhalbzeug zur Herstellung eines Faserverbundbauteils anliegt, hat, und das eine Temperiereinrichtung hat, die mit der formgebenden Werkzeugoberfläche zumindest in Teilbereichen zur Temperierung des Faserhalbwerkzeuges thermisch zusammenwirkt, wobei die Temperiereinrichtung einen Hohlraum und ein mit dem Hohlraum kommunizierend verbundenen Fluideinlass aufweist,
b) Bereitstellen einer Temperierkammer, die zum Temperieren eines in der Temperierkammer befindlichen gasförmigen Fluides und zum Zirkulieren des gasförmigen Fluides in der Temperierkammer ausgebildet ist,
c) Einbringen des Formwerkzeuges in die Temperierkammer derart, dass der Fluideinlass so in Strömungsrichtung des in der Temperierkammer zirkulierenden gasförmigen Fluides ausgerichtet ist, dass das gasförmige temperierte Fluid in den Hohlraum zur Temperierung des Faserhalbzeuges strömen kann, und
d) Herstellen des Faserverbundbauteils durch Temperieren und Zirkulieren des gasförmigen Fluides.

Die Erfindung wird anhand der beigefügten Zeichnung beispielhaft erläutert. Es zeigt:

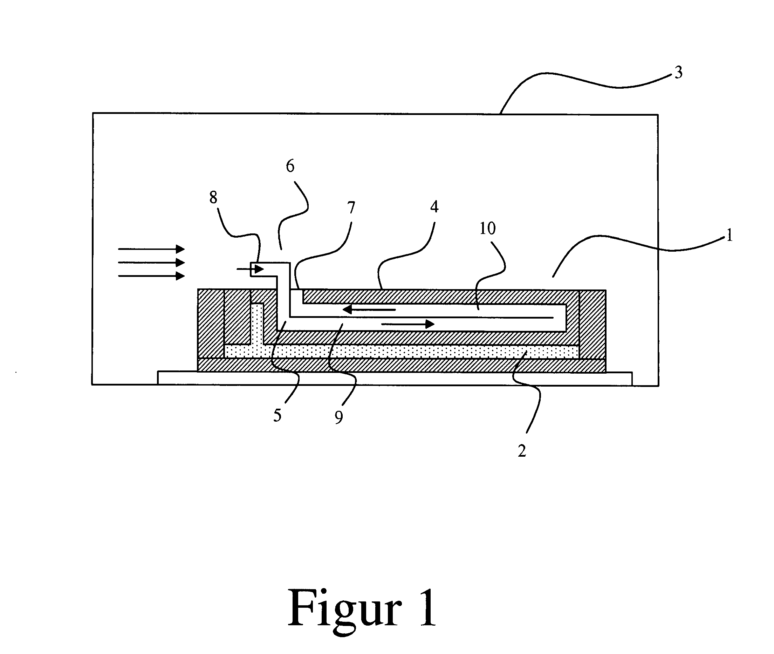

- Figur 1: - schematische Darstellung des erfindungsgemäßen Formwerkzeuges.

Figur 1 zeigt ein Formwerkzeug 1, in das ein Faserhalbzeug 2 zur Herstellung eines Faserverbundbauteils eingebracht wurde. Das Formwerkzeug 1 wurde in eine Temperierkammer 3 eingefahren, wo zur Herstellung des Faserverbundbauteils der Aushärtungsprozess durchgeführt werden soll.

Das Formwerkzeug 1 weist einen Formkern 4 auf, der einen Hohlraum 5 zur Temperierung des Faserhalbzeuges 2 hat. Der Hohlraum 5 ist über einen Fluideinlass 6 kommunizierend mit der Temperierkammer 3 verbunden, so dass gasförmiges Fluid in den Hohlraum 5 einströmen kann. Über einen Fluidauslass 7 kann das in den Hohlraum 5 eingeströmte gasförmige Fluid wieder zurück in die Temperierkammer 3 strömen.

Im Ausführungsbeispiel der Figur 1 weist der Fluideinlass 6 ein in Strömungsrichtung abgebogenes Einströmrohr 8 auf, durch das das in der Temperierkammer 3 zirkulierende gasförmige Fluid in den Hohlraum 5 einströmen kann.

Des Weiteren ist in dem Ausführungsbeispiel der Figur 1 der Hohlraum 5 in einen ersten Fluidbereich 9 und einen zweiten Fluidbereich 10 unterteilt, die miteinander verbunden sind. Der erste Fluidbereich 9 ist dabei bauteilnah vorgesehen und mit dem Fluideinlass 6 kommunizierend verbunden, so dass über den Fluideinlass 6 einströmendes Fluid in den ersten Fluidbereich 9 gelangt, um so das Faserhalbzeug 2 aufgrund der thermischen Wechselwirkung zu temperieren. Anschließend strömt das gasförmige Fluid über den zweiten, bauteilfernen Fluidbereich 10 zurück in Richtung Fluideinlass 6, um an dem dort angeordneten

Fluidauslass 7 zurück in die Temperierkammer 5 zu strömen.

Das Formwerkzeug 1 kann auch so ausgebildet sein, dass der Hohlraum 5 nicht vollständig geschlossen ist.

Das in der Temperierkammer 3 zirkulierende gasförmige Fluid, welches zur Durchführung des Aushärtungsprozesses temperiert ist, gelangt somit in direkte Bauteilnähe, wodurch die thermische Masse des Formwerkzeuges 1 drastisch reduziert ist und die thermische Trägheit des Gesamtsystems verringert wird. Hierdurch können die Prozesszyklen erhöht werden.

## Patentansprüche

1. Formwerkzeug (1) zur Herstellung eines Faserverbundbauteils mit einer formgebenden Werkzeugoberfläche, an der ein Faserhalbzeug (2) zur Herstellung des Faserverbundbauteils anliegt, und mit mindestens einer zur Temperierung des Faserhalbzeuges (2) vorgesehenen Temperiereinrichtung, die mit der formgebenden Werkzeugoberfläche zumindest in Teilbereichen zur Temperierung des Faserhalbzeuges (2) thermisch zusammenwirkt, **dadurch gekennzeichnet, dass** die Temperiereinrichtung einen in dem Formwerkzeug (1) vorgesehenen Hohlraum (5) aufweist, der über mindestens einen Fluideinlass (6) mit einer Temperierkammer (3), in der das Formwerkzeug (1) zur Herstellung des Faserverbundbauteils eingebracht wurde, kommunizierend derart in Verbindung steht, dass ein temperiertes, in der Temperierkammer (3) zirkulierendes gasförmiges Fluid zur Temperierung des Faserhalbzeuges (2) in den Hohlraum (5) strömen kann, wobei der Hohlraum (5) über einen Fluidauslass (7) mit der Temperierkammer (3) kommunizierend derart in Verbindung steht, dass das in den Hohlraum (5) eingestömte gasförmige Fluid in die Temperierkammer (3) zurückströmen kann, und wobei der Fluideinlass (6) ein Einströmrohr (8) aufweist, dessen eines Ende in den Hohlraum (5) mündet und dessen anderes Ende in Strömungsrichtung des in der Temperierkammer (3) zirkulierenden gasförmigen Fluides ausgerichtet ist.

2. Formwerkzeug (1) nach Anspruch 1, **dadurch gekennzeichnet, dass** der Hohlraum (5) einen ersten, bauteilnahen Fluidbereich (9), der mit dem Fluideinlass (6) kommunizierend verbunden ist und zur Temperierung des Faserhalbzeuges (2) mit der Werkzeugoberfläche thermisch zusammenwirkt, und wenigstens einen mit dem ersten Fluidbereich (9) verbundenen zweiten, bauteilfernen Fluidbereich (10) aufweist, der mit dem Fluidauslass (7) kommunizierend verbunden ist.

3. Formwerkzeug (1) nach einem der vorhergehenden Ansprüche, **dadurch gekennzeichnet, dass** mindestens eine steuerbare Drosseleinrichtung vorgesehen ist, die zur Steuerung der in den Hohlraum (5) einströmenden Fluidmenge des gasförmigen Fluides ausgebildet ist.

4. Formwerkzeug (1) nach einem der vorhergehenden Ansprüche, **dadurch gekennzeichnet, dass** das Formwerkzeug (1) mindestens einen Formkern (4) hat, der die Temperiereinrichtung mit dem Hohlraum (5) und dem mindestens einen Fluideinlass (6) aufweist.

5. Vorrichtung zur Herstellung eines Faserverbundbauteils mit
- einem Formwerkzeug (1) nach einem der vorhergehenden Ansprüche,
- einer Temperierkammer (3), in der das Formwerkzeug (1) zur Herstellung des Faserverbundbauteils einbringbar ist, und
- einem Strömungs- und Temperiersystem, das zum Temperieren eines in der Temperierkammer (3) befindlichen gasförmigen Fluides und zum Zirkulieren des gasförmigen Fluides ausgebildet ist.

6. Verfahren zur Herstellung eines Faserverbundbauteils, mit den Schritten:
a) Bereitstellen eines Formwerkzeuges (1), das eine formgebende Werkzeugoberfläche, an der ein Faserhalbzeug (2) zur Herstellung des Faserverbundbauteils anliegt, hat und das eine Temperiereinrichtung hat, die mit der formgebenden Werkzeugoberfläche zumindest in Teilbereichen zur Temperierung des Faserhalbzeuges (2) thermisch zusammenwirkt, wobei die Temperiereinrichtung einen Hohlraum (5) und einen mit Hohlraum kommunizierend verbundenen Fluideinlass (6) aufweist,
b) Bereitstellen einer Temperierkammer (3), die zum Temperieren eines in der Temperierkammer befindlichen gasförmigen Fluides und zum Zirkulieren des temperierten gasförmigen Fluides in der Temperierkammer (3) ausgebildet ist,
c) Einbringen des Formwerkzeuges in die Temperierkammer derart, dass der Fluideinlass (6) so in Strömungsrichtung des in der Temperierkammer zirkulierenden gasförmigen Fluides ausgerichtet ist, dass das gasförmige Fluid in den Hohlraum (5) zur Temperierung des Faserhalbzeuges strömen kann, und
wobei der Hohlraum (5) über einen Fluidauslass (7) mit der Temprierkammer (3) kommunizierend derart in Verbindung steht, dass das in den Hohlraum (5) eingeströmte gasförmige Fluid in die Temperierkammer (3) zurückströmen kann, und
d) Herstellen des Faserverbundbauteils durch Temperieren und Zirkulieren des gasförmigen Fluides.

## Claims

1. Moulding tool (1) for producing a fibre composite component, having a shaping tool surface, against which a semifinished fibre product (2) for producing the fibre composite component lies, and having at least one temperature-control device, which is intended for controlling the temperature of the semifinished fibre product (2) and thermally interacts with the shaping tool surface, at least in partial regions, to control the temperature of the semifinished fibre product (2), **characterized in that** the temperature-control device has a cavity (5), which is provided in the moulding tool (1) and which is in such communicating connection by way of at least one fluid inlet (6) with a temperature-control chamber (3) into which the moulding tool (1) for producing the fibre composite component has been introduced that a temperature-controlled gaseous fluid intended for controlling the temperature of the semifinished fibre product (2) and circulating in the temperature-control chamber (3) can flow into the cavity (5), the cavity (5) being in such communicating connection with the temperature-control chamber (5) by way of a fluid outlet (7) that the gaseous fluid that has flowed into the cavity (5) can flow back into the temperature-control chamber (3), and the fluid inlet (6) having an inflow tube (8), the one end of which opens out into the cavity (5) and the other end of which is aligned in the direction of flow of the gaseous fluid circulating in the temperature-control chamber (3).

2. Moulding tool (1) according to Claim 1, **characterized in that** the cavity (5) has a first fluid region (9), which is close to the component, is connected in a communicating manner to the fluid inlet (6) and thermally interacts with the tool surface to control the temperature of the semifinished fibre product (2), and at least one second fluid region (10), which is remote from the component, is connected to the first fluid region (9) and is connected in a communicating manner to the fluid outlet (7).

3. Moulding tool (1) according to one of the preceding claims, **characterized in that** at least one controllable throttle device is provided, designed for controlling the amount of fluid of the gaseous fluid flowing into the cavity (5).

4. Moulding tool (1) according to one of the preceding claims, **characterized in that** the moulding tool (1) has at least one mould core (4), which has the temperature-control device with the cavity (5) and the at least one fluid inlet (6).

5. Device for producing a fibre composite component, comprising
- a moulding tool (1) according to one of the preceding claims,
- a temperature-control chamber (3), into which the moulding tool (1) for producing the fibre composite component can be introduced, and
- a flow and temperature-control system, which is designed for controlling the temperature of a gaseous fluid located in the temperature-control chamber (3) and for circulating the gaseous fluid.

6. Method for producing a fibre composite component, comprising the steps of:
a) providing a moulding tool (1), which has a shaping tool surface, against which a semifinished fibre product (2) for producing the fibre composite component lies, and which has a temperature-control device, which thermally interacts with the shaping tool surface, at least in partial regions, to control the temperature of the semifinished fibre product (2), the temperature-control device having a cavity (5) and a fluid inlet (6) connected in a communicating manner to the cavity,
b) providing a temperature-control chamber (3), which is designed for controlling the temperature of a gaseous fluid located in the temperature-control chamber and for circulating the temperature-controlled gaseous fluid in the temperature-control chamber (3),
c) introducing the moulding tool into the temperature-control chamber in such a way that the fluid inlet (6) is aligned in the direction of flow of the gaseous fluid circulating in the temperature-control chamber such that the gaseous fluid can flow into the cavity (5) to control the temperature of the semifinished fibre product, and
the cavity (5) being in such communicating connection with the temperature-control chamber (3) by way of a fluid outlet (7) that the gaseous fluid that has flowed into the cavity (3) can flow back into the temperature-control chamber (3), and
d) producing the fibre composite component by controlling the temperature of and circulating the gaseous fluid.

## Revendications

1. Outil de formage (1) pour la fabrication d'un élément composite renforcé de fibres avec une surface d'outil de mise en forme, sur laquelle repose un demi-produit de fibres (2) destiné à la fabrication de l'élément composite renforcé de fibres, et avec au moins un dispositif d'équilibrage de la température prévu pour l'équilibrage de la température du demi-produit de fibres (2), qui coopère thermiquement avec la surface d'outil de mise en forme au moins dans des régions partielles pour l'équilibrage de la température du demi-produit de fibres (2), **caractérisé en ce que** le dispositif d'équilibrage de la température présente une cavité (5) prévue dans l'outil de formage (1), qui se trouve en liaison de communication par au moins une entrée de fluide (6) avec une chambre d'équilibrage de la température (3), dans laquelle l'outil de formage (1) pour la fabrication de l'élément composite renforcé de fibres a été introduit, de telle manière qu'un fluide gazeux tempéré circulant dans la chambre d'équilibrage de la température (3) destiné à l'équilibrage de la température du demi-produit de fibres (2) puisse s'écouler dans la cavité (5), dans lequel la cavité (5) se trouve en liaison de communication par une sortie de fluide (7) avec la chambre d'équilibrage de la température (3), de telle manière que le fluide gazeux qui est entré dans la cavité (5) puisse refluer dans la chambre d'équilibrage de la température (3), et dans lequel l'entrée de fluide (6) présente un tube d'entrée (8), dont une extrémité débouche dans la cavité (5) et dont l'autre extrémité est orientée dans la direction d'écoulement du fluide gazeux circulant dans la chambre d'équilibrage de la température (3).

2. Outil de formage (1) selon la revendication 1, **caractérisé en ce que** la cavité (5) présente une première région de fluide (9) proche de l'élément, qui est reliée en communication avec l'entrée de fluide (6) et qui coopère thermiquement avec la surface d'outil pour l'équilibrage de la température du demi-produit de fibres (2), et au moins une deuxième région de fluide (10), éloignée de l'élément, reliée à la première région de fluide (9), qui est en liaison de communication avec la sortie de fluide (7).

3. Outil de formage (1) selon l'une quelconque des revendications précédentes, **caractérisé en ce qu'**il est prévu au moins un dispositif d'étranglement réglable, qui est configuré pour la commande du débit de fluide du fluide gazeux qui pénètre dans la cavité (5).

4. Outil de formage (1) selon l'une quelconque des revendications précédentes, **caractérisé en ce que** l'outil de formage (1) comporte au moins un noyau de formage (4), qui présente le dispositif d'équilibrage de la température avec la cavité (5) et ladite au moins une entrée de fluide (6).

5. Dispositif pour la fabrication d'un élément composite renforcé de fibres, avec:
- un outil de formage (1) selon l'une quelconque des revendications précédentes,
- une chambre d'équilibrage de la température (3), dans laquelle l'outil de formage (1) pour la fabrication de l'élément composite renforcé de fibres peut être introduit, et
- un système d'écoulement et d'équilibrage de la température, qui est configuré pour l'équilibrage de la température d'un fluide gazeux se trouvant dans la chambre d'équilibrage de la température (3) et pour la circulation du fluide gazeux.

6. Procédé de fabrication d'un élément composite renforcé de fibres, comportant les étapes suivantes:
a) mise à disposition d'un outil de formage (1), qui comporte une surface d'outil de mise en forme, sur laquelle repose un demi-produit de fibres (2) destiné à la fabrication de l'élément composite renforcé de fibres, et qui comporte un dispositif d'équilibrage de la température, qui coopère thermiquement avec la surface d'outil de mise en forme au moins dans des régions partielles pour l'équilibrage de la température du demi-produit de fibres (2), dans lequel le dispositif d'équilibrage de la température présente une cavité (5) et une entrée de fluide (6) en liaison de communication avec la cavité,
b) mise à disposition d'une chambre d'équilibrage de la température (3), qui est configurée pour l'équilibrage de la température d'un fluide gazeux se trouvant dans la chambre d'équilibrage de la température et pour la circulation du fluide gazeux tempéré dans la chambre d'équilibrage de la température (3),
c) introduction de l'outil de formage dans la chambre d'équilibrage de la température, de telle manière que l'entrée de fluide (6) soit orientée dans la direction d'écoulement du fluide gazeux circulant dans la chambre d'équilibrage de la température, de telle manière que le fluide gazeux puisse s'écouler dans la cavité (5) pour l'équilibrage de la température du demi-produit de fibres, et dans lequel la cavité (5) se trouve en liaison de communication par une sortie de fluide (7) avec la chambre d'équilibrage de la température (3), de telle manière que le fluide gazeux qui est entré dans la cavité (5) puisse refluer dans la chambre d'équilibrage de la température (3), et
d) fabrication de l'élément composite renforcé de fibres par équilibrage de la température et circulation du fluide gazeux.
